# EUROPÄISCHE PATENTSCHRIFT

(11) **EP 2 710 364 B1**
(45) Veröffentlichungstag und Bekanntmachung des Hinweises auf die Patenterteilung: **24.06.2015**
(21) Anmeldenummer: 12727614.5
(22) Anmeldetag: 18.05.2012
(51) Int. Cl.: G01N 29/02, G01N 29/032, G01N 29/24

(54) **VORRICHTUNG UND VERFAHREN ZUM BESTIMMEN VON EIGENSCHAFTEN EINES MEDIUMS**
DEVICE AND METHOD FOR DETERMINING PROPERTIES OF A MEDIUM
DISPOSITIF ET PROCÉDÉ DE DÉTERMINATION DES CARACTÉRISTIQUES D'UN MILIEU

(30) Priorität: 19.05.2011 DE 102011076132
(43) Veröffentlichungstag der Anmeldung: 26.03.2014
(73) Patentinhaber: SensAction AG, 96450 Coburg (DE)
(72) Erfinder: FAUSTMANN, Hendrik, 96450 Coburg (DE); MÜNCH, Michael, 96450 Coburg (DE)
(74) Vertreter: Staroske, Sandro
(86) Internationale Anmeldenummer: PCT/EP2012/059289
(87) Internationale Veröffentlichungsnummer: WO 2012/156517

(56) Entgegenhaltungen:
- WO-A2-2008/034878
- US-A- 5 936 150
- US-A1- 2009 114 798

## Beschreibung

Die Erfindung betrifft eine Vorrichtung zum Bestimmen von Eigenschaften eines Mediums gemäß Anspruch 1 sowie ein Verfahren zum Herstellen einer derartigen Vorrichtung gemäß Anspruch 6.

Die Verwendung von Schallwellen zur Ermittlung von Eigenschaften (z.B. der Temperatur oder der Zusammensetzung) eines flüssigen oder gasförmigen Mediums ist aus dem Stand der Technik bekannt. Beispielsweise offenbart die WO 2008/034878 eine Vorrichtung zur Anregung von Oberflächenschallwellen in einem an das zu untersuchende Medium angrenzenden Träger, wobei mit Hilfe der Oberflächenschallwellen physikalische und/oder chemische Eigenschaften des Mediums ermittelt werden.

Die US 2009/0114798 A1 beschreibt eine Vorrichtung mit einem Sender und einem Empfänger, die an einem gemeinsamen Träger in Form eines Si-Substrats angeordnet sind. Auf dem Si-Substrat ist ein Absorptionsbereich bestehend aus einer Polysiliziumschicht und zwei Metallschichten angeordnet.

In der US 5 936 150 A ist ein Sensor beschrieben, der einen akustischen Resonator mit einer oberen und einer unteren Elektrode umfasst.

Das der Erfindung zugrunde liegende Problem besteht darin, eine Vorrichtung zum Bestimmen von Eigenschaften eines Mediums anzugeben, die eine möglichst effiziente Untersuchung des Mediums ermöglicht. Des Weiteren soll ein Verfahren zum Herstellen einer derartigen Vorrichtung angegeben werden.

Diese Probleme werden durch die Vorrichtung mit den Merkmalen gemäß Anspruch 1 bzw. durch das Verfahren mit den Merkmalen gemäß Anspruch 6 gelöst. Weiterbildungen der Erfindung sind in den abhängigen Ansprüchen angegeben.

Danach wird eine Vorrichtung zum Bestimmen von Eigenschaften eines Mediums bereitgestellt, mit
- einem Träger, der in Kontakt mit dem Medium bringbar ist;
- mindestens einem an dem Träger angeordneten Sender zum Anregen von akustischen Wellen in dem Träger;
- mindestens einem an dem Träger angeordneten Empfänger zum Empfangen von akustischen Wellen, die auf mittels des Senders in dem Träger angeregte akustische Wellen zurückgehen;
- einem an dem Träger angeordneten ersten Materialbereich; und
- einem an dem Träger angeordneten zweiten Materialbereich, wobei der zweite Materialbereich so beschaffen ist, dass er Schallwellen mit der Frequenz der im Träger angeregten akustischen Wellen stärker absorbiert als der erste Materialbereich.

Erfindungsgemäß weist der Träger der Vorrichtung eine erste Oberfläche auf, mit der er in Kontakt mit dem Medium zu bringen ist, und eine zweite Oberfläche, die der ersten Oberfläche abgewandt ist, wobei der Sender sowie der erste und der zweite Materialbereich an der zweiten Oberfläche angeordnet sind.

Der erste und der zweite Materialbereich sorgen insbesondere dafür, dass eine Ausbreitung der Schallwellen in einer unerwünschten Richtung und damit z.B. Reflexionen an anderen Strukturen der Vorrichtung und somit Echos im Empfängersignal unterdrückt oder zumindest reduziert werden. Zudem können äußere Störungen gedämpft, der Signal-Rausch-Abstand des Empfängersignals erhöht und/oder die Abhängigkeit des Empfängersignals von Eigenschaften des Mediums linearisiert werden. Darüber hinaus können der erste und der zweite Materialbereich die Vorrichtung mechanisch stabilisieren und z.B. auch einer Beschlagbildung auf dem Träger und/oder dem Sender bzw. dem Empfänger entgegenwirken.

Der Sender ist insbesondere so ausgebildet, dass er in dem Träger akustische Oberflächenwellen z.B. in Form von Lamb-Wellen oder in Form einer Mischform aus Lamb- und Rayleigh-Wellen anregt. Beispielsweise werden akustische Oberflächenwellenpulse in dem Träger erzeugt. Die in dem Träger angeregten akustischen Oberflächenwellen koppeln zum Teil aus dem Träger in das Medium aus, d.h. es erfolgt eine zumindest teilweise Konversion der im Träger laufenden akustischen Oberflächenwellen in Volumenschallwellen in dem Medium. Umgekehrt werden die im Medium angeregten Volumenschallwellen zum Teil wieder in Oberflächenschallwellen in dem Träger zurückverwandelt, die dann mit dem Empfänger registriert werden können. Ein Teil der in dem Träger angeregten akustischen Oberflächenwellen wird jedoch auch unmittelbar in dem Träger zu dem Empfänger laufen und dort detektiert werden. Es ist jedoch auch denkbar, dass mittels des Senders nicht oder zumindest nicht ausschließlich Oberflächenwellen in dem Träger angeregt werden, sondern allgemein Schallwellen, die z.B. eine longitudinale Komponente (längs des Trägers) und eine transversale Komponente (senkrecht zum Träger) aufweisen. Es ist auch möglich, dass rein longitudinale Wellen in dem Träger angeregt werden.

Darüber hinaus kann mindestens einer der beiden Materialbereiche so beschaffen sein, dass eine Konversion von in dem Träger angeregten Schallwellen in Volumenschällwellen in dem Medium begünstigt wird, d.h. ein größerer Anteil der Schallwellen im Träger in das Medium auskoppelt als dies ohne die Materialbereiche der Fall wäre. Insbesondere sind die Materialbereiche so ausgebildet, dass einerseits der erste Materialbereich das Einkoppeln von Schallwellen aus dem Träger in das Medium begünstigt und andererseits durch den stärker absorbierenden zweiten Materialbereich ein Auskoppeln aus dem Träger in einer Richtung vom Medium weg gedämpft wird.

Zudem kann insbesondere der erste Materialbereich so ausgebildet sein, dass er die Anregung eines bestimmten Typs von Schallwellen, d.h. Schallwellen mit einer bestimmten longitudinale und transversalen Komponente, begünstigt. Beispielsweise ist der erste Materialbereich und/oder der zweite Materialbereich so ausgebildet, dass bevorzugt Oberflächenwellen oder Kriechwellen in dem Träger angeregt werden. Es ist auch denkbar, dass der erste und/oder der zweite Materialbereich so ausgebildet ist, dass im Träger bei einer ersten Frequenz (bzw. einem ersten Frequenzbereich) ein erster Wellentyp (z.B. Oberflächenwellen) und bei einer zweiten Frequenz (bzw. einem zweiten Frequenzbereich) ein zweiter Wellentyp (z.B. Kriechwellen) angeregt wird.

Gemäß einer Weiterbildung der Erfindung ist der erste Materialbereich zudem so beschaffen, dass er Schallwellen mit der Frequenz der im Träger angeregten Wellen stärker reflektiert als der zweite Materialbereich. Insbesondere ist der höher reflektierende erste Materialbereich zumindest abschnittsweise zwischen dem Träger und dem zweiten Materialbereich angeordnet, wobei die beiden Materialbereiche insbesondere auf einer bei Betrieb der Vorrichtung dem zu untersuchenden Medium abgewandten Seite des Trägers angeordnet sind. Somit wirkt insbesondere der höher reflektierende erste Materialbereich einem Austreten von akustischen Wellen aus dem Träger über eine dem Medium abgewandte Oberfläche des Trägers entgegen und begünstigt insbesondere, wie oben erwähnt, das Überkoppeln von Wellen in das Medium, d.h. die Konversion von im Träger angeregten akustischen Wellen in Volumenschallwellen im Medium, stärker als der zweite Materialbereich.

Es ist möglich, dass der erste Materialbereich in einem ersten Frequenzbereich Schallwellen stärker reflektiert als in einem zweiten Frequenzbereich, so dass in dem ersten Frequenzbereich ein größerer Anteil der im Träger angeregten Schallwellen in das Medium überkoppeln wird als in dem zweiten Frequenzbereich, d.h. die Konversion von Schallwellen im Träger in Volumenschallwellen frequenzabhängig erfolgt bzw. die Frequenzabhängigkeit der Konversion verändert (z.B. verstärkt) wird, wie oben bereits erwähnt. Auch kann durch die Frequenzabhängigkeit des Reflexionsverhaltens des ersten Materialbereichs eine frequenzabhängige Anregung eines bestimmten Wettentyps im Träger erfolgen, wie oben ebenfalls bereits erwähnt.

Die Eigenschaften der vom Empfänger detektierten akustischen Wellen, d.h. einerseits Oberflächenschallwellen, die durch Re-Konversion von Volumenschallwellen entstehen oder andererseits Oberflächenschallwellen, die direkt in dem Träger vom Sender zum Empfänger laufen, hängen von Eigenschaften des Mediums (zum Beispiel dessen Zusammensetzung, Massendichte und/oder Temperatur) ab. Entsprechend hängt auch das (elektrische) Empfängersignal von den Eigenschaften des Mediums, so dass durch Analyse des Empfängersignals Eigenschaften des Mediums bestimmt werden können. Insbesondere hängen die Laufzeit und die Amplitude der am Empfänger einlaufenden Oberflächenschallwellen (und damit das Zeitverhalten und die Amplitude des Empfängersignals) von Eigenschaften des Mediums ab.

Die erfindungsgemäße Vorrichtung stellt somit einen Sensor dar, der insbesondere zum Bestimmen von Eigenschaften eines Mediums in Form einer Flüssigkeit und/oder eines weichen Materials (zum Beispiel ein biologisches Gewebe oder ein Gel) verwendet werden kann. Es ist jedoch auch denkbar, dass die Vorrichtung zum Bestimmen von Eigenschaften eines Mediums in Form eines Gases eingesetzt wird. Beispielsweise wird die Vorrichtung in das Medium teilweise oder vollständig eingetaucht oder so mit einem mit dem Medium befüllten Reservoir oder einer von dem Medium durchströmten Leitung verbunden, dass das Medium durch die Vorrichtung strömen kann. Mit der erfindungsgemäßen Vorrichtung können Eigenschaften des Mediums kontinuierlich verfolgt werden, um zeitabhängige Eigenschaften zu bestimmen ("Monitoring"). Zudem ist eine ortsaufgelöste Messung einer räumlich inhomogen verteilten Eigenschaft des Mediums möglich.

Bei dem Träger handelt es sich beispielsweise um eine im Wesentlichen plane (plattenartige), insbesondere zumindest im Wesentlichen starre, Struktur, wobei der Träger auch aus mehreren Teileelementen, zum Beispiel mehreren zueinander beabstandeten Platten, ausgebildet sein kann. Natürlich kann der Träger auch einstückig ausgeformt sein.

Darüber hinaus ist denkbar, dass es sich bei dem Träger um eine räumliche Struktur handelt, zum Beispiel um einen Hohlzylinder. Bei der Ausgestaltung des Trägers als Hohlzylinder bildet der Träger eine Mantelfläche aus, die ein mit dem zu untersuchenden Medium befüllbares inneres Volumen begrenzt.

Des Weiteren kann ein an das Medium angrenzender Abschnitt des Trägers selber einen Hohlraum aufweisen, in dem sich der Sender und/oder der Empfänger befinden. So kann z.B. bei einer Ausbildung des Trägers als Hohlzylinder die Wandung des Hohlzylinders oder bei einer Platte als Trägers die Platte den Hohlraum aufweisen. Beispielsweise wird der durch einen Abschnitt des Trägers ausgebildete Hohlraum durch eine innere Wandung, die bei Betrieb der Vorrichtung mit einer inneren Seite in physischem Kontakt mit dem Medium steht, und einer äußeren Wandung, die eine Außenseite der Vorrichtung ausbildet, begrenzt. Darüber hinaus ist denkbar, dass der erste und/oder der zweite Materialbereich ebenfalls in diesem Hohlraum angeordnet sind.

Gemäß einer anderen Ausgestaltung der Erfindung weist der erste Materialbereich ein erstes Material und der zweite Materialbereich ein zweites Material auf, wobei das zweite Material eine größere Massendichte aufweist als das erste Material. Des Weiteren ist denkbar, dass der zweite Materialbereich eine höhere akustische Impedanz besitzt als der erste Materialbereich, wobei unter der "akustischen Impedanz" insbesondere der Quotient aus Schalldruck und Schallfluss verstanden wird.

Der erste und der zweite Materialbereich weisen zumindest ein Material auf, das sich in seinem festen Zustand befindet, d.h. der erste und der zweite Materialbereich sind nicht ausschließlich durch ein Gas (Luft) gebildet.

Als Material für den ersten Materialbereich kommt zum Beispiel ein schaumartiges Material (zum Beispiel Polyurethan-Schaum) in Frage. Als Material für den zweiten Materialbereich wird z.B. Silikon oder Epoxydharz verwendet. Das Material des ersten Materialbereichs und/oder das Material des zweiten Materialbereichs kann eine Füllung, z.B. Luftblasen und/oder Metallpartikel, aufweisen. Beispielsweise werden über die Art (z.B. die Größe der Metallpartikel) und/oder die Konzentration der Füllung die Eigenschaften des ersten und/oder des zweiten Materialbereichs gezielt angepasst. So ist es möglich, dass je nach Art und/oder der Konzentration der Füllung der erste und/oder der zweite Materialbereich in einem ersten Frequenzbereich die Konversion von im Träger angeregten Schallwellen in Volumenschallwellen im Medium stärker begünstigt (z.B. Schallwellen in diesem Frequenzbereich stärker reflektiert) als in einem zweiten Frequenzbereich; z.B. wird die Konversion in dem zweiten Frequenzbereich unterdrückt. Auch ist denkbar, dass in Abhängigkeit von der Art und/oder der Konzentration der Füllung im Träger ein bestimmter Wellentyp bevorzugt angeregt wird.

Auch ist denkbar, dass der erste Materialbereich einen Lack oder eine metallische Beschichtung, die zum Beispiel gleichzeitig als Leiterbahn zum Kontaktieren von Bauelementen (zum Beispiel des Senders und/oder des Empfängers) benutzt werden kann, aufweist.

Die Erfindung betrifft auch ein Verfahren zum Herstellen einer Vorrichtung gemäß einem der vorhergehenden Ansprüche, mit den Schritten:
- Bereitstellen eines Trägers;
- Anordnen eines Senders an dem Träger zum Erzeugen von akustischen Wellen in dem Träger;
- Anordnen eines Empfängers an dem Träger zum Empfangen von sich in dem Träger ausbreitenden akustischen Wellen;
- Anordnen eines ersten und eines zweiten Materialbereichs an dem Träger, wobei der zweite Materialbereich Schallwellen mit der Frequenz der im Träger angeregten akustischen Wellen stärker absorbiert als der erste Materialbereich.

Erfindungsgemäß weist der Träger der Vorrichtung eine erste Oberfläche auf, mit der er in Kontakt mit dem Medium zu bringen ist, und eine zweite Oberfläche, die der ersten Oberfläche abgewandt ist, wobei der Sender sowie der erste und der zweite Materialbereich an der zweiten Oberfläche angeordnet sind.

Die Erfindung wird im Folgenden anhand von Ausführungsbeispielen unter Bezugnahme auf die Figuren näher erläutert. Es zeigen:
- Figur 1: eine Schnittansicht einer Vorrichtung zum Bestimmen von Eigenschaften eines Mediums gemäß einem ersten Ausführungsbeispiel der Erfindung;
- Figur 2: eine Schnittansicht einer Vorrichtung gemäß einem zweiten Ausführungsbeispiel der Erfindung; und
- Figur 3: eine Schnittansicht einer Vorrichtung gemäß einem dritten Ausführungsbeispiel der Erfindung.

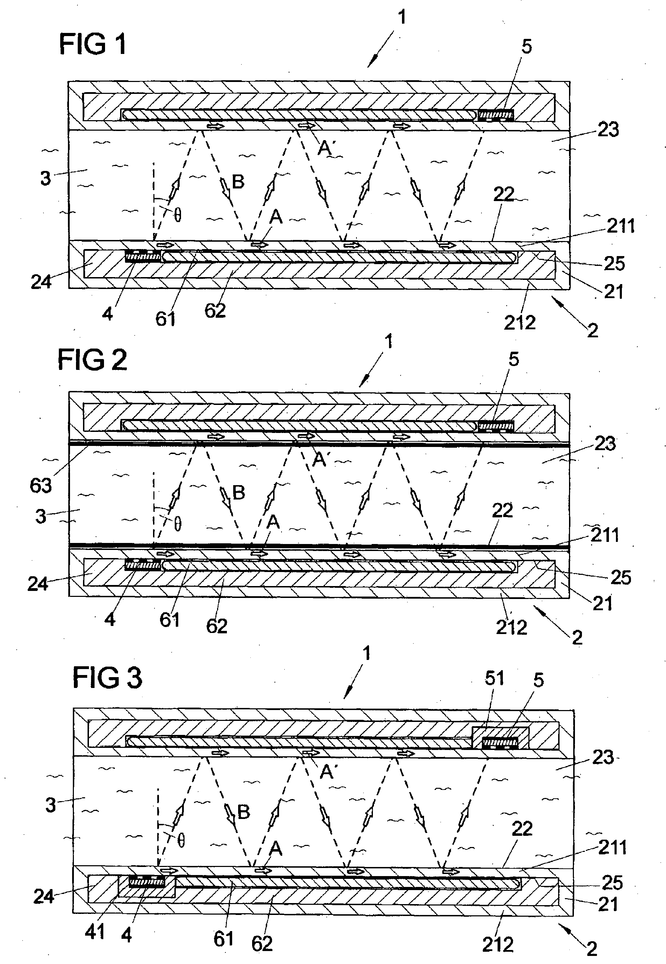

Die in Figur 1 dargestellte erfindungsgemäße Vorrichtung 1 weist einen Träger in Form eines Hohlzylinders 2 auf, wobei eine innere Oberfläche 22 eines Mantels 21 des Hohlzylinders 2 ein inneres Volumen 23 der Vorrichtung 1 begrenzt. In dem inneren Volumen 23 befindet sich ein Medium in Form einer Flüssigkeit 3, wobei chemische und/oder physikalische Eigenschaften der Flüssigkeit 3 mit Hilfe der erfindungsgemäßen Vorrichtung 1 bestimmbar sind. Der Hohlzylinder 2 ist insbesondere aus einem nicht-piezoelektrischen Material (z.B. einem Metall oder einem Kunststoff) ausgebildet.

Der Mantel 21 des Hohlzylinders 2 ist zumindest abschnittsweise als Hohlkörper ausgebildet, wobei ein erster (innerer) Abschnitt 211 des Mantels 21, der die erwähnte innere Oberfläche 22 ausbildet, einen Hohlraum 24 zum inneren Volumen 23 hin und ein zweiter (äußerer) Abschnitt 212 den Hohlraum 24 nach außen begrenzt.

An einer dem Hohlraum 24 zugewandten Oberfläche 25 des ersten Abschnitts 211 ist ein Sender 4 zum Anregen von akustischen Oberflächenwellen (Pfeile A) in dem Träger, d. h. in dem ersten Abschnitt 211 des Mantels 21, angeordnet.

Ein Teil der in dem Abschnitt 211 angeregten Oberflächenschallwellen A wird in die Flüssigkeit 3 auskoppeln, d.h. in Volumenschallwellen B in der Flüssigkeit konvertiert. Ein Teil dieser Volumenschallwellen B wiederum wird an einem anderen, z.B. dem Sender 4 in einer Richtung senkrecht zur Ausbreitungsrichtung A der Oberflächenwellen (d.h. radial) gegenüberliegenden Bereich des inneren Abschnitts 211 reflektiert und ein anderer Teil in akustische Oberflächenschallwellen A' in dem Träger zurückverwandelt. Diese Oberflächenschallwellen A' werden von einem Empfänger 5 detektiert, wobei der Empfänger 5 ebenfalls an einer dem Hohlraum 24 abgewandten Seite des inneren Abschnitts 211 angeordnet ist.

Allerdings ist der Empfänger 5 an einem Bereich des inneren Abschnitts 211 angeordnet, der dem Bereich des inneren Abschnitts 211 mit dem Sender 4 radial gegenüberliegt. Es ist jedoch auch denkbar, dass der Empfänger 5 an anderer Stelle platziert wird, z. B. so, dass er mit dem Sender 4 auf einer gemeinsamen Geraden liegt, die sich entlang der Längsachse des Hohlzylinders 2 erstreckt. Darüber hinaus ist denkbar, dass mindestens ein weiterer Empfänger vorgesehen ist, der z. B. an demselben Bereich des inneren Abschnitts 211 angeordnet ist wie der Sender 4, z.B. mit dem Sender 4 zumindest näherungsweise auf einer gemeinsamen Geraden entlang der Längsachse des Hohlzylinders 2 liegt.

Ein Teil der vom Sender 4 in dem inneren Abschnitt 211 angeregten Oberflächenschallwellen wird auch auf direktem Wege, d. h. über den inneren Abschnitt 211 des Hohlzylinders 2 zu dem Empfänger 5 gelangen, so dass das vom Empfänger erzeugte Signal so-wohl einen Anteil enthält, der auf die durch Modenrückkonversion entstandenen Oberflächenschallwellen A' zurückgeht, als auch einen Anteil, der bei Empfang von Oberflächenschallwellen, die direkt vom Sender 4 zum Empfänger 5 laufen, erzeugt wird. Beide Anteile des Empfängersignals sind abhängig von Eigenschaften der Flüssigkeit 3, so dass durch Auswerten der Signalanteile auf Eigenschaften der Flüssigkeit zurückgeschlossen werden kann.

In dem Hohlraum 24 des Mantels 21 befinden sich ein erster und ein zweiter Materialbereich in Form eines ersten Vergusses 61 und eines zweiten Vergusses 62. Der erste Verguss 61 ist unmittelbar an der Oberfläche 25 des ersten Abschnitts 211 des Mantels 21 angeordnet, während der zweite Verguss 62 nur abschnittsweise in Kontakt mit dem ersten Abschnitt 211 ist. Ansonsten erstreckt sich der zweite Verguss 62 zwischen dem ersten Verguss 61 und dem äußeren Abschnitt 212 des Mantels 21, wobei er sowohl den Sender 4 als auch den Empfänger 6 an einer dem ersten Abschnitt 211 des Hohlzylinders 2 abgewandten Rückseite als auch seitlich auf einer dem ersten Verguss 61 abgewandten Seite umgibt. Der zweite Verguss 62 besteht aus einem Material, das Schallwellen mit einer Frequenz der angeregten Oberilächenschallwellen A stärker absorbiert als der erste Verguss 61. Gleichzeitig reflektiert das Material des ersten Vergusses 61 die Oberflächenschallwellen A stärker als das Material des zweiten Vergusses 62.

Der erste und der zweite Verguss 61, 62 verhindern somit insbesondere eine unerwünschte Auskopplung der Oberflächenschallwellen A von der Flüssigkeit 3 weg (d. h. in den Hohlraum 24 hinein) oder dämpfen zumindest entlang eines unerwünschten Ausbreitungspfades in dem Hohlzylinder 2 verlaufende Oberflächenschallwellen. Zudem wird mittels des ersten und des zweiten Vergusses ein reproduzierbarer Zustand der Rückseite (d.h. der äußeren Oberfläche 25) realisiert, der möglichst unabhängig von äußeren Einflüssen (d.h. der Umgebung der Vorrichtung 1) ist.

Darüber hinaus kann insbesondere der erste Verguss 61 so beschaffen sein, dass er die Konversion von im Hohlzylinder 2 angeregten akustischen Wellen (z.B. ortsabhängig) beeinflusst, wie oben erläutert. Auch ist möglich, dass der erste Verguss 61 so ausgebildet ist, dass im Hohlzylinder 2 bevorzugt (z.B. ausschließlich) ein bestimmter Wellentyp (z.B. die genannten Oberflächenwellen) angeregt wird. Insbesondere ist der erste Verguss so beschaffen (durch Wahl des Materials und/oder seiner Abmessungen), dass der Typ der angeregten Wellen von der Anregungsfrequenz des Senders abhängt. Beispielsweise begünstigt der erste Verguss 61 in einem ersten Frequenzbereich die Anregung eines ersten Wellentyps (z.B. Oberflächenwellen) und in einem zweiten Frequenzbereich die Anregung eines zweiten Wellentyps (z.B. Kriechwellen, die sich hauptsächlich oder ausschließlich in der Wandung des Hohlzylinders 2 ausbreiten). Dass ein Wellentyp "begünstigt" wird, bedeutet insbesondere, dass der effektive Schallbrechungsindex des Hohlzylinders 2 durch den ersten Verguss 61 so verändert wird, dass sich ausschließlich oder überwiegend der gewünschte Wellentyp im Hohlzylinder ausbreiten kann.

So ist es z.B. möglich, von einem Normalbetrieb (erster Frequenzbereich mit Anregung z.B. von Oberflächenwellen) auf einen Selbsttestbetrieb (zweiter Frequenzbereich mit Anregung z.B. von Kriechwellen) umzuschalten, wobei die im zweiten Frequenzbereich angeregten Kriechwellen nur im Hohlzylinder von dem Sender zum Empfänger laufen, so dass z.B. eine Beschädigung des Hohlzylinders detektierbar ist.

Darüber hinaus können der erste und der zweite Verguss 61, 62 strukturiert (z.B. streifenförmig ausgebildet) sein, um den Oberflächenschallwellen A eine gewünschte Ausbreitungsrichtung aufzuprägen. Im Ausführungsbeispiel der Figur 1 weist der zweite Verguss 62 eine größere Dicke (senkrecht zum ersten Abschnitt 211 des Trägers 2) auf als der erste Verguss 61. Dies ist jedoch nicht zwingend, es ist auch möglich, dass der erste Verguss eine größere Dicke aufweist als der zweite Verguss oder die Vergüsse zumindest näherungsweise gleiche Dicken aufweisen.

Des Weiteren können die Vergüsse 61, 62 jeweils durchgehend ausgebildet sein, d.h. sich durchgehend von dem Bereich des ersten Abschnitts 211 des Hohlzylinders 2, an dem der Sender 4 angeordnet ist, bis zu dem Bereich des ersten Abschnitts 211 des Hohlzylinders 2 mit dem Empfänger 5 erstrecken. Insbesondere erstrecken sich der erste und der zweite Verguss 61, 62 entlang des kompletten inneren Umfanges des ersten Abschnitts 211 des Trägers 2. Es ist allerdings auch möglich, dass der erste und/oder der zweite Verguss 61, 62 mehrere voneinander beabstandete Teilbereiche ausbilden.

Figur 2 zeigt eine Schnittansicht einer Vorrichtung 1 gemäß einem zweiten Ausführungsbeispiel der Erfindung. Hier ist im Vergleich mit dem in Fig. 1 dargestellten Ausführungsbeispiel zusätzlich ein weiterer Materialbereich in Form einer Beschichtung 63 an der Innenseite 22 des inneren Abschnitts 211 des Mantels 21 angeordnet.

Die Beschichtung 63 weist eine akustische Impedanz auf, die größer ist als die akustische Impedanz der zu untersuchenden Flüssigkeit 3 und kleiner als die akustische Impedanz des Hohlzylinders 2, d. h. des inneren Abschnitts 211. Somit wird über die Beschichtung 63 eine Anpassung der Impedanz des inneren Abschnitts 211 an die Impedanz der Flüssigkeit 3 realisiert. Es ist auch denkbar, dass die Beschichtung 63 korrespondierend zu dem ersten und dem zweiten Verguss 61, 62 strukturiert ist, um eine Führung der Oberflächenschallwellen A zu unterstützen. Beispielsweise weist die Beschichtung 63 mehrere voneinander beabstandete Teilbereiche auf. Es ist jedoch auch möglich, dass die Beschichtung 63 durchgehend ausgebildet ist und z.B. zumindest mit einem Teilabschnitt entlang des kompletten inneren Umfanges des ersten Abschnitts 211 des Hohlzylinders 2 verläuft.

Die Dicke der Beschichtung 63 ist insbesondere kleiner als die Dicke des ersten Abschnitts 211 des Hohlzylinders 2 und insbesondere kleiner als die Wellenlänger der im ersten Abschnitt 211 angeregten akustischen Oberflächenwellen A. Als Material für die Beschichtung kommt z.B. ein Material in Frage, das eine Massendichte aufweist, die zwischen der Massendichte des Mediums und dem Material des Trägers liegt. Des Weiteren könnte ein Material verwendet werden, in dem die Schallgeschwindigkeit größer ist als die Schallgeschwindigkeit im Medium und kleiner als im Material des Trägers.

Es wird darauf hingewiesen, dass die Impedanzanpassung mittels der Beschichtung 63 selbstverständlich auch ohne den ersten und den zweiten Verguss 61, 62 erfolgen kann

Figur 3 betrifft ein weiteres Ausführungsbeispiel der Erfindung. Danach weist die erfindungsgemäße Vorrichtung 1 einen weiteren Materialbereich in Form eines dritten Vergusses 41 auf, in den der Sender 4 eingebettet ist, wobei sich der dritte Verguss 41 insbesondere entlang einer dem inneren Abschnitt 211 des Hohlzylinders 2 abgewandten Seite des Senders 4 erstreckt.

Des Weiteren umfasst der Materialbereich einen vierten Verguss 51, in der Empfänger 5 eingebettet ist, wobei sich der vierte Verguss 51 analog zu dem dritten Verguss 41 entlang einer dem inneren Abschnitt 211 des Hohlzylinders 2 abgewandten Seite des Empfängers 5 verläuft.

Der dritte und vierte Verguss 41, 51 dienen einerseits zum Schutz des Senders und des Empfängers. Des Weiteren kann der dritte Verguss 41 und/oder der vierte Verguss 51 so ausgebildet sein, dass die Resonanzamplitude des als Interdigitalwandler ausgebildeten Senders 41 und/oder die Resonanzamplitude des als Interdigitalwandler ausgebildeten Empfängers 5 beeinflusst werden. Insbesondere können die Resonanzamplituden lurch den Verguss 41 bzw. durch den Verguss 51 so beeinflusst werden, dass entweder nur die asymmetrische Grundmode in dem inneren Abschnitt 211 angeregt (bzw. detektiert) wird oder nur die symmetrische Grundmode. Als Material für den dritten und/oder vierten Verguss kann z.B. ein elektrisch leitfähiges Vergussmaterial verwendet werden.

Der dritte und der vierte Verguss 41, 51 sind insbesondere durch voneinander beabstandete Materialbereiche ausgeformt. Es ist jedoch auch möglich, dass ein durchgehender Verguss den dritten und den vierten Verguss 41, 51 ausbildet. Darüber hinaus muss natürlich nicht zwingend auch der erste und der zweite Verguss 61, 62 in dem Hohlraum 24 des Mantels 21 angeordnet sein.

Es wird darüber hinaus darauf hingewiesen, dass Elemente der beschriebenen Ausführungsbeispiele natürlich auch in Kombination miteinander verwendet werden können. So ist es z. B. möglich, auch im Ausführungsbeispiel der Figur 3 zusätzlich eine innere Beschichtung 63 zur Impedanzanpassung vorzusehen.

### Bezugszeichenliste

- 1: Vorrichtung
- 2: Hohlzylinder
- 3: Flüssigkeit
- 4: Sender
- 5: Empfänger
- 21: Mantel
- 22: innere Oberfläche
- 23: inneres Volumen
- 24: Hohlraum
- 25: Oberfläche
- 41: dritter Verguss
- 51: vierter Verguss
- 61: erster Verguss
- 62: zweiter Verguss
- 63: Beschichtung
- 211: erster Abschnitt
- 212: zweiter Abschnitt
- A, A': akustische Oberflächenwellen
- B: Volumenschallwellen

## Patentansprüche

1. Vorrichtung zum Bestimmen von Eigenschaften eines Mediums, mit
- einem Träger (2), der in Kontakt mit dem Medium (3) bringbar ist;
- mindestens einem an dem Träger (2) angeordneten Sender (4) zum Anregen von akustischen Wellen (A) in dem Träger (2);
- mindestens einem an dem Träger (2) angeordneten Empfänger (5) zum Empfangen von akustischen Wellen (A, A'), die auf mittels des Senders (4) in dem Träger (2) angeregte Wellen (A) zurückgehen;
- einem an dem Träger (4) angeordneten ersten Materialbereich (61); und
- einem an dem Träger (4) angeordneten zweiten Materialbereich (62), wobei der zweite Materialbereich (62) so beschaffen ist, dass er Schallwellen mit der Frequenz der im Träger (2) angeregten akustischen Wellen (A) stärker absorbiert als der erste Materialbereich (61),
**dadurch gekennzeichnet, dass**
der Träger (2) eine erste Oberfläche (22) aufweist, mit der er in Kontakt mit dem Medium (3) zu bringen ist, und eine zweite Oberfläche (25), die der ersten Oberfläche (22) abgewandt ist, wobei der Sender (4) sowie der erste und der zweite Materialbereich (61, 62) an der zweiten Oberfläche (25) angeordnet sind.

2. Vorrichtung nach Anspruch 1, **dadurch gekennzeichnet, dass** der erste Materialbereich (61) so beschaffen ist, dass er Schallwellen mit der Frequenz der im Träger (2) angeregten Wellen (A) stärker reflektiert als der zweite Materialbereich (62).

3. Vorrichtung nach Anspruch 1 oder 2, **dadurch gekennzeichnet, dass** der erste Materialbereich (61) zumindest abschnittsweise zwischen dem Träger (2) und dem zweiten Materialbereich (62) verläuft.

4. Vorrichtung nach einem der vorhergehenden Ansprüche, **dadurch gekennzeichnet, dass** der erste Materialbereich (61) ein erstes Material aufweist und der zweite Materialbereich (62) ein zweites Material, wobei das zweite Material eine größere Massendichte aufweist als der erste Material.

5. Vorrichtung nach einem der vorhergehenden Ansprüche, **gekennzeichnet durch** Bestimmungsmittel zum Bestimmen von Eigenschaften des Mediums anhand eines bei Empfang von akustischen Schallwellen (A, A') **durch** den Empfänger (5) erzeugten Signals;

6. Verfahren zum Herstellen einer Vorrichtung gemäß einem der vorhergehenden Ansprüche, mit den Schritten:
- Bereitstellen eines Trägers (2);
- Anordnen eines Senders (4) an dem Träger (2) zum Erzeugen von akustischen Wellen (A) in dem Träger (2);
- Anordnen eines Empfängers (5) an dem Träger (2) zum Empfangen von sich in dem Träger ausbreitenden akustischen Wellen (A, A');
- Anordnen eines ersten und eines zweiten Materialbereichs (61, 62) an dem Träger (2), wobei der zweite Materialbereich (62) Schallwellen mit der Frequenz der im Träger (2) angeregten akustischen Wellen (A) stärker absorbiert als der erste Materialbereich (61),
**dadurch gekennzeichnet, dass**
der Träger (2) eine erste Oberfläche (22) aufweist, mit der er in Kontakt mit dem Medium (3) zu bringen ist, und eine zweite Oberfläche (25), die der ersten Oberfläche (22) abgewandt ist, wobei der Sender (4) sowie der erste und der zweite Materialbereich (61, 62) an der zweiten Oberfläche (25) angeordnet werden.

## Claims

1. A device for determining properties of a medium, comprising
- a carrier (2), which can be brought into contact with the medium (3);
- at least one transmitter (4) arranged on the carrier (2) for the excitation of acoustic waves (A) in the carrier (2);
- at least one receiver (5) arranged on the carrier (2) for the reception of acoustic waves (A, A') which originate from waves (A) excited in the carrier (2) by means of the transmitter (4);
- a first material area (61) arranged on the carrier (2); and
- a second material area (62) arranged on the carrier (2), the second material area (62) being of such a nature that it absorbs sound waves at the frequency of the acoustic waves (A) excited in the carrier (2) more strongly than the first material area (61),
**characterized in that**
the carrier (2) comprises a first surface (22), with which it is to be brought into contact with the medium (3), and a second surface (25), which faces away from the first surface (22), wherein the transmitter (4) as well as the first and the second material areas (61, 62) are arranged on the second surface (25).

2. The device according to Claim 1, **characterized in that** the first material area (61) is of such a nature that it reflects sound waves at the frequency of the waves (A) excited in the carrier (2) more strongly than the second material area (62).

3. The device according to Claim 1 or 2, **characterized in that**, at least in some sections, the first material area (61) extends between the carrier (2) and the second material area (62).

4. The device according to one of the preceding claims, **characterized in that** the first material area (61) comprises a first material and the second material area (62) comprises a second material, wherein the second material has a higher mass density than the first material.

5. The device according to one of the preceding claims, **characterized by** determination means for determining properties of the medium by using a signal generated upon receipt of acoustic sound waves (A, A') by the receiver (5).

6. A method for producing a device according to one of the preceding claims, comprising the steps:
- providing a carrier (2);
- arranging a transmitter (4) on the carrier (2) for the generation of acoustic waves (A) in the carrier (2);
- arranging a receiver (5) on the carrier (2) for the reception of acoustic waves (A, A') being propagated in the carrier;
- arranging a first and a second material area (61, 62) on the carrier (2), wherein the second material area (62) absorbs sound waves at the frequency of the acoustic waves (A) excited in the carrier (2) more strongly than the first material area (61),
**characterized in that**
the carrier (2) comprises a first surface (22), with which it is to be brought into contact with the medium (3), and a second surface (25), which faces away from the first surface (22), wherein the transmitter (4) as well as the first and the second material areas (61, 62) are arranged on the second surface (25).

## Revendications

1. Dispositif de détermination des caractéristiques d'un milieu, avec :
- un support (2) qui peut être mis en contact avec le milieu (3) ;
- au moins un émetteur (4), disposé au niveau du support (2), servant à exciter des ondes acoustiques (A) dans le support (2) ;
- au moins un récepteur (5), disposé au niveau du support (2), servant à recevoir des ondes acoustiques (A, A') qui proviennent des ondes (A) excitées dans le support (2) au moyen de l'émetteur (4) ;
- une première zone de matériau (61) disposée au niveau du support (4) ; et
- une seconde zone de matériau (62) disposée au niveau du support (4), la seconde zone de matériau (62) étant telle qu'elle absorbe des ondes sonores à la fréquence des ondes acoustiques (A) excitées dans le support (2) plus fortement que la première zone de matériau (61),
**caractérisé en ce que**
le support (2) comprend une première surface (22), avec laquelle il doit être mis en contact avec le milieu (3), et une seconde surface (25) qui est opposée à la première surface (22), l'émetteur (4) ainsi que la première et la seconde zone de matériau (61, 62) étant disposés au niveau de la seconde surface (25).

2. Dispositif selon la revendication 1, **caractérisé en ce que** la première zone de matériau (61) est telle qu'elle réfléchit des ondes sonores à la fréquence des ondes acoustiques (A) excitées dans le support (2) plus fortement que la seconde zone de matériau (62).

3. Dispositif selon la revendication 1 ou 2, **caractérisé en ce que** la première zone de matériau (61) est située au moins par secteurs entre le support (2) et la seconde zone de matériau (62).

4. Dispositif selon l'une quelconque des revendications précédentes, **caractérisé en ce que** la première zone de matériau (61) comprend un premier matériau et que la seconde zone de matériau (62) comprend un second matériau, le second matériau présentant une masse volumique plus grande que celle du premier matériau.

5. Dispositif selon l'une quelconque des revendications précédentes, **caractérisé par** des moyens de détermination servant à déterminer des caractéristiques du milieu à l'aide d'un signal généré par le récepteur (5) lors de la réception d'ondes acoustiques (A, A').

6. Procédé de fabrication d'un dispositif selon l'une quelconque des revendications précédentes, avec les étapes :
- utilisation d'un support (2) ;
- disposition d'un émetteur (4) au niveau du support (2) afin de générer des ondes acoustiques (A) dans le support (2) ;
- disposition d'un récepteur (5) au niveau du support (2) afin de recevoir des ondes acoustiques (A, A') se répandant dans le support ;
- disposition d'une première et d'une seconde zone de matériau (61, 62) au niveau du support (2), la seconde zone de matériau (62) absorbant des ondes sonores à la fréquence des ondes acoustiques (A) excitées dans le support (2) plus fortement que la première zone de matériau (61),
**caractérisé en ce que**
le support (2) comprend une première surface (22), avec laquelle il doit être mis en contact avec le milieu (3), et une seconde surface (25) qui est opposée à la première surface (22), l'émetteur (4) ainsi que la première et la seconde zone de matériau (61, 62) étant disposés au niveau de la seconde surface (25).
